Europäisches Patentamt

European Patent Office

Office européen des brevets

(19)

(11) Veröffentlichungsnummer: **0 285 676**
**B1**

(12) # EUROPÄISCHE PATENTSCHRIFT

(45) Veröffentlichungstag der Patentschrift:
03.10.90

(51) Int. Cl.⁵: **A23L 2/26**, C12G 1/06

(21) Anmeldenummer: **87104320.4**

(22) Anmeldetag: **24.03.87**

(54) Verfahren zur Herstellung eines Getränkes.

(43) Veröffentlichungstag der Anmeldung:
**12.10.88 Patentblatt 88/41**

(45) Bekanntmachung des Hinweises auf die Patenterteilung:
**03.10.90 Patentblatt 90/40**

(84) Benannte Vertragsstaaten:
**BE CH DE FR GB IT LI NL SE**

(56) Entgegenhaltungen:
**DE-A- 2 515 360**
**DE-A- 3 043 282**
**DE-U- 8 104 654**
**FR-A- 2 415 432**
**FR-A- 2 457 076**
**GB-A- 2 112 619**

**Brockhaus'Konversationslexikon 14. Auflage,**
**Berlin-Wien 1902: "Gärung ..."**

(73) Patentinhaber: **Osberger, Helmut, Ing.,, Nr. 94,**
**A-3491 Strass im Strassertal(AT)**

(72) Erfinder: **Osberger, Helmut, Ing.,, Nr. 94, A-3491 Strass**
**im Strassertal(AT)**

(74) Vertreter: **Bockhorni, Josef, Dipl.-Ing. et al,**
**Herrmann-Trentepohl, Kirschner, Grosse, Bockhorni &**
**Partner Forstenrieder Allee 59, D-8000 München 71(DE)**

## Beschreibung

Zur Förderung und Erhaltung der Gesundheit und Vitalität benötigt der menschliche Organismus mit seinen Billionen Zellen sehr zahlreiche enzymatische (fermentative) Wirkstoffkomponenten, wobei unter Enzymen oder Fermenten Eiweißstoffe (Apofermente) verstanden werden. Gemeinsam mit spezifischen Wirkgruppen (Cofermente) lösen sie in unserem Körper die zahlreichen Anforderungen des Stoffwechsels, des Um-, Auf- und Abbaues der Betriebsstoffe sowie der Nahrungsverwertung. Als Katalysatoren bewältigen sie diese Aufgabe sehr wirtschaftlich; die meisten Enzyme sind spezifisch in der Wirkung, d.h. für ein bestimmtes Gebiet ist ein eigenes Ferment erforderlich.

Die Cofermente sind häufig Vitaminabkömmlinge und daraus ergibt sich die Wichtigkeit einer vitaminreichen Ernährung und die bedeutung des Konsums vitaminreicher Fruchtsäfte.

Zur Förderung und Erhaltung der Gesundheit sind Multi-Vitamin-Fruchtsaftgetränke bekannt, die bereits im Herstellerbetrieb mit Vitaminen angereichert werden.Die Vorteile artiger Getränke sind unbestritten, jedoch ergibt sich bis zum Gebrauch und insbesondere nach erstmaligem Öffnen der Flasche und längerwährendem Gebrauch ein Abbau der die Vitalität fördernden Wirkstoffe, der den Wirkungsgrad derartiger Getränke wiederum verringert.

Aufgabe der Erfindung ist die Herstellung eines Vitaminreichen Getränkes, welches Spannkraft und Gesundheit fördert und selbst frisch ohne besonderen Aufwand zubereitet werden kann.

Diese Aufgabe wird erfindungsgemäß durch die in Patentanspruchs 1 enthaltenen Merkmale gelöst, wobei zweckmäßige Weiterbildungen in den Unteransprüchen gekennzeichnet sind.

Die Erfindung beruht darauf, daß der menschliche Körper abgesehen von den in solchen Fruchtsäften enthaltenen Vitaminen und Spurenelementen zur Erhaltung seiner Spannkraft und Gesundheit auch der zeitweisen Zufuhr von lebenden Zellen (Frischzellen) bedarf. Nun besteht bekanntlich Hefe (Bierhefe, Backhefe, Weinhefe) aus mikroskopisch kleinen, einzelligen Pilzen, die die Haupterreger der Gärung sind und sich gleich zu Beginn einer Gärung durch Zellteiluntg außerordentlich rasch vermehren. Durch den Zusatz von Hefe kann somit ein Gärungspozeß eingeleitet werden, bei dem alle enzymatischen Wirkstoffgruppen, darunter alle B-Vitamine, Enzyme, Spurenelemente (Mg, Fe, Cu, Co und andere) Mineralstoffe, Komplexe und Proteine in eine lösliche Form gebracht und durch die rapide Vermehrung der jungen Hefezellen stark vermehrt werden. Das heißt, nach Maßgabe der Erfindung wird durch die vorhergehende Zugabe von Hefe ein Getränk zubereitet, bei dem alle enzymatischen Wirkstoffgruppen in eine lösliche Form gebracht wurden, so daß sich ein die Förderung und Erhaltung der Gesundheit und der Vitalität dienendes Frischgetränk ergibt, welches Frischzellen enthält und auch sehr wohlschmeckend ist. Dieses Getränk fördert aber nicht nur das Wohbefinden des Konsumenten, sondern ermöglich dem Verdauungstrakt eine leichte und vollständige Resorption und eine wertvolle Anregung zur Selbstheilung organischer Schäden. Speziell für ältere Menschen mit nachlassenden Organleistungen, wie herabgesetzter Verdauungsfunktion oder in der Rekonvaleszenz erscheint demnach die Zufuhr junger, aktiver Frischhefezellen außerordentlich fördernd für die Gesundheit und Aktivität. Geschmack und Beschaffenheit des Getränkes lassen sich ferner im Rahmen der Erfindung vorteilhafterweise mannigfaltig variieren, nämlich einerseits zunächst schon durch die Wahl der Ausgangsbasis (Gattung des Fruchtsaftes), andererseits aber auch durch Wahl der Hefesorte und schließlich auch durch die Wahl der Dauer der Gärung, also des Grades des Alkohol- bzw. Zuckergehaltes im Endprodukt. Derjenige Zeitpunkt, zu dem einer bestimmten Menge des Fruchtsaftes eine gleichfalls vorbestimmte Menge der Hefe hinzugefügt werden muß, kann variiert werden und ist letztendlich von den Wünschen des Verbrauchers abhängig. Der Zeitpunkt bzw. die Zeitspanne kann somit selbst gewählt werden, jedoch können vom Herstellerbetrieb entsprechende Anweisungen mitgegeben werden, um bis zum Verbrauchszeitpunkt die gewünschte Ausbildung von Frischzellen durch die Gärung im Getränk zu erhalten.

Der Vorteil der Erfindung liegt vor allem darin, daß ein mit Frischzellen angereichertes Getränk ohne besonderen Aufwand selbst zubereitet werden kann, wobei individuelle Wünsche bei der Herstellung bzw. bei der frischen Zubereitung vom Einzelnen selbst berücksichtigt werden können.

Es ist bekannt (DE-U 8 104 654, DE-A3 043 282), einem in einer Flasche abgefüllten Süßmost Weinhefe zuzugeben bzw. einem Wein Champagnerhefe zuzuführen, um ein alkoholartiges Getränk zu schaffen.

In den DE-A 2 515 360 wird ein instantlösliches Trockenprodukt, das durch gemeinsame Trocknung von voreingedicktem Fruchtsaft mit aktiver Hefe gewonnen worden ist, beschrieben; diesem Produkt werden jedoch keine Vitamine zugesetzt.

Die Bereitstellung der für die Zubereitung des Getränkes erforderlichen Zutaten kann zweckmäßigerweise durch Verwendung eines Behälters für eine bestimmte Menge von Fruchtsaftkonzentrat, das mit Vitaminen angereichert ist, erfolgen, sowie mit einer Packung einer auf die Fruchtsaftmenge bzw. Konzentratmenge abgestimmten Hefemenge, vorzugsweise Trockenhefe. Dem kann eine Anweisung zur Dosierung und Verwendung dieser Zutaten zur Herstellung eines zumindest teilweise gärenden Getränkes beigegeben werden.

Verwendet werden kann gerner ein Mischbehälter für das aus einem flüssigen, pastösen oder festen Fruchtsaftkonzentrat und Wasser sowie der Hefe bestehende Gemenge, dessen vorbestimmter Rauminhalt die rezeptgemäße Zu-Zusammensetzung des Gemenges sicherstellt, wenn der Behälter beispielsweise mit Wasser fefüllt wird. Unter Fruchtsaftkonzentrat ist hierbei auch ein Konzentrat verschiedener Früchte zu verstehen. Ein Vorteil des Fruchtsaftkonzentrats besteht darin, daß das Volumen der Verpackung geringer gehalten werden kann, da das Konzentrat erst bei und nach Bedarf vor dem Konsum verdünnt wird. Der verringerte Verpackungsanteil ist hierbei aus Gründen des Umweltschutzes vorteilhaft. Der Mischbehälter kann ferner als Vorratsbehälter ausgebildet und mit einem Ausgabeventil, beispielsweise in Art eines Zapfhahnes, ausgestattet sein.

Dem Getränk können ferner auch noch Zucker, Aromastoffe, Kräuter bzw. Kräuterextrakte, zur Beeinflussung des Geschmackes und/oder des gesundheitlichen Befinden beigegeben werden.

Das Fruchtsaftkonzentrat kann flüssig oder als wasserlöslicher Feststoff, beispielsweise in Pulver- oder Tablettenform, zur Anwendung gelangen. Gleiches gilt für die Hefe, die als wasserlöslicher Feststoff, beispielsweise in Pulver- oder Tablettenform, anwendbar ist.

## Patentansprüche

1. Packung, bestehend aus einem für den Menschen zuträglichen mit Vitaminen angereicherten Fruchtsaftkonzentrat sowie einer darauf abgestimmten Hefemenge, zur Bereitung eines mit Frischzellen angereicherten durch Zusammengeben der Packungskomponeneten und Stehenlassen der Mischung für eine gewählte Zeitspanne.

2. Packung nach Anspruch 1, dadurch gekennzeichnet, daß das Fruchtsaftkonzentrat und/oder die Hefe als wasserlöslicher Feststoff in Pulver- oder Tablettenform vorliegen und zur Zubereitung des Getränks Flüssigkeit zugesetzt wird.

## Claims

1. Package consisting of a fruit juice concentrate enriched with vitamins beneficial to human health and a quantity of yeast adjusted thereto for the preparation of a fresh beverage enriched with living cells by means of mixing the package components and leaving the mixture for a chosen period of time.

2. Package according to claim 1, characterized in that the fruit juice concentrate and/or the yeast are present in form of water-soluble solid substance either in form of powder or tablets and that liquid is added for the preparation of the beverage.

## Revendications

1. Un paquet constitué d'un concentré de jus de fruits enrichi de vitamines favorables à la santé humaine et d'une quantité de levure y précisément adaptée pour la préparation d'une boisson fraîche enrichie de cellules vivantes en mélangeant les composantes du paquet et en laissant agir ce mélange pour un laps de temps choisi individuellement.

2. Un paquet selon revendication 1, caractérisé par le fait que le concentré de jus de fruits et/ou la levure sont présentés en solides solubles dans l'eau en forme de poudre ou de comprimé et que de l'eau est ajoutée pour la préparation de la boisson.